**Europäisches Patentamt**

**European Patent Office**

**Office européen des brevets**

(11) Veröffentlichungsnummer : **0 153 461 B1**

(12)

# EUROPÄISCHE PATENTSCHRIFT

(45) Veröffentlichungstag der Patentschrift :
04.05.88

(51) Int. Cl.⁴ : **G 11 B 17/02**

(21) Anmeldenummer : **84114851.3**

(22) Anmeldetag : **06.12.84**

(54) **Magnetplattenspeicher mit beidseitig gelagerter Plattenstapelnabe.**

(30) Priorität : 07.02.84 DE 3404251

(43) Veröffentlichungstag der Anmeldung :
04.09.85 Patentblatt 85/36

(45) Bekanntmachung des Hinweises auf die Patenterteilung : 04.05.88 Patentblatt 88/18

(84) Benannte Vertragsstaaten :
**AT CH DE FR GB IT LI NL**

(56) Entgegenhaltungen :
**DE-A- 2 443 593**
**US-A- 4 190 870**
**US-A- 4 263 629**
**US-A- 4 315 288**

(73) Patentinhaber : **Siemens Aktiengesellschaft Berlin
und München
Wittelsbacherplatz 2
D-8000 München 2 (DE)**

(72) Erfinder : **Brand, Wilhelm, Dipl.-Ing.
Turnerweg 21B
D-8200 Rosenheim (DE)**
Erfinder : **Dierkes, Albert, Dipl.-Ing.
Galileistrasse 10
D-8033 Planegg (DE)**
Erfinder : **Olbrich, Otto, Dipl.-Ing.
Birkenstrasse 39
D-8028 Taufkirchen (DE)**

**Beschreibung**

Die Erfindung bezieht sich auf einen Magnetplattenspeicher gemäß dem Oberbegriff des Hauptanspruches.

Bei Magnetplattenspeichern unterscheidet man gewöhnlich zwischen Festplattenspeichern und Wechselplattenspeichern. Die technische Entwicklung geht weiterhin ständig zu höheren Speicherkapazitäten, einerseits sowohl hinsichtlich der Spurdichte und der Bitdichte als Charakteristik für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, dessen Magnetplatten nach Industriestandard einen Außendurchmesser von 130 mm und einen Innendurchmesser von 40 mm aufweisen. Für diesen Speichertyp hat sich als Standard in Analogie zu den Abmessungen von konkurrierenden Floppy Disk Laufwerken ein Einbauraum mit einer Einbauhöhe von 82,5 mm und einer Grundfläche von 146 mm × 203 mm als Einheitsgröße herausgebildet, der für das gesamte Gerät einschließlich Gehäuse und die zugehörige Elektronik zur Verfügung steht.

Dem Entwicklungsziel nach höheren Speicherkapazitäten ordnet sich, neben dem Bemühen, die Aufzeichnungsdichte auf den Magnetplatten selbst zu erhöhen, das Bestreben unter, möglichst viele Magnetplatten in diesem vorgegebenen Einbauraum unterzubringen. Im Sinne dieses konstruktiven Bestrebens sind Ausführungen von 5 1/4 Zoll Festplattenspeichern bekannt geworden, bei denen der Antriebsmotor für den Plattenstapel soweit miniaturisiert und derart konstruktiv ausgelegt ist, daß er selbst bei einem vorgegebenen Innendurchmesser der Speicherplatten von 40 mm immer noch in die Nabe des Plattenstapels einzubauen ist. Damit ist ein die Bauhöhe von konventionellen Festplattenspeichern wesentlich mitbestimmendes Element in die Nabe des Magnetplattenstapels integriert und somit die für den Plattenstapel nutzbare Einbauhöhe erweitert. Auf diese Weise sind nach heutigen Gegebenheiten der Größe der kombinierten Magnetköpfe und der Plattendicke Plattenstapel möglich geworden, die bis zu acht Magnetplatten übereinander gestapelt enthalten. Die restliche Einbauhöhe wird für das Gehäuse und die Geräteelektronik benötigt.

Wie erwähnt, ist die Aufzeichnungsdichte auf der Magnetplatte das Produkt aus Schreibdichte mal Spurdichte. Insbesondere aus der Spurdichte mit beispielsweise über 1 000 Spuren/Zoll ergibt sich für den Fall der vorliegenden Erfindung weiterhin ein wesentliches Kriterium für den konstruktiven Aufbau eines Magnetplattenspeichers. Diese hohe Spurdichte erfordert eine möglichst schwingungssteife Lagerung der Spindel des Plattenstapels in dem Gehäuse. Damit werden für diesen Speichertyp Forderungen erhoben, die bisher nur bei größeren Plattenspeichern, z.B. den 14 Zoll Plattenspeichern eine Rolle spielten.

Bei Plattenspeichern größeren Durchmessers ist es allgemein bekannt, in zum Teil sehr aufwendig ausgeführten Konstruktionen die Spindel des Plattenstapels einseitig in einer schweren Grundplatte zu lagern, was insbesondere für Wechselplattenspeicher gilt, bei denen der Plattenstapel aus dem Magnetspeichergerät entnehmbar sein muß. Andererseits sind auch Aufbauten bekannt, bei denen die Spindel in einem den Stapel umschließenden starren Gehäuse beidseitig gelagert ist. Um eine möglichst schwingungssteife Spindellagerung zu erreichen, werden bei dieser beidseitigen Lagerung ein Festlager und ein Loslager verwendet und dem Loslager benachbart eine Feder vorgesehen, die beide Lager nach dem Zusammenbau so miteinander verspannt, daß eine koaxiale und möglichst spielfreie Spindelführung erzielt wird. Allerdings ist dieses Ziel bei einer Kombination von Fest- und Loslager immer nur bedingt erreichbar. Außerdem wird für den Einbau der Feder zusätzlich Einbauraum benötigt, der damit als nutzbarer Speicherraum verlorengeht und beim Einbau des Motors in die Nabe wertvollen Platz wegnimmt.

Der vorliegenden Erfindung liegt daher die Aufgabe zugrunde, einen Magnetplattenspeicher mit einer beidseitigen Lagerung der Nabe in dem Gehäuse zu schaffen, die platzsparend gestaltet ist, gegebenenfalls den Einbau eines Antriebsmotors in die Nabe des Plattenstapels erlaubt und dabei dennoch konstruktiv einfach ist, um überhöhte Fertigungskosten zu vermeiden, die bei dem ständig sinkenden Verhältnis von Preis/Speicherkapazität nicht tragbar sind.

Diese Aufgabe wird gemäß der vorliegenden Erfindung bei dem eingangs genannten Magnetplattenspeicher mit den im Kennzeichen des Patentanspruches 1 beschriebenen Merkmalen gelöst. Diese Lösung zeichnet sich insbesondere dadurch aus, daß eine nun eindeutig spielfreie Spindellagerung mit Hilfe von zwei Festlagern anstelle einer üblichen Kombination von Loslager und Festlager erzielt wird, so daß das bei einem Loslager immer unvermeidliche Spiel entfällt. Weiterhin ist das Gehäuse des Plattenspeichers so gestaltet, daß ein separates Verspannelement nicht benötigt wird und damit vor allem der dadurch gewonnene Anteil des Einbauraumes der nutzbaren Einbauhöhe zugeschlagen werden kann.

Weitere Einzelheiten und Vorteile ergeben sich für den Fachmann aus der nachfolgenden Beschreibung von Ausführungsbeispielen anhand der Zeichnung und den Patentansprüchen. Dabei zeigen :

Fig. 1 und 2 den Aufbau eines gemäß der Erfindung ausgebildeten Magnetplattenspeichers, wobei insbesondere in Fig. 2 in einem Schnitt entlang II ... II dargestellt in Fig. 1 Einzelheiten der Spindellagerung dargestellt sind ; und

Fig. 3 in einer weiteren Schnittdarstellung entlang der Schnittlinie III ... III von Fig. 1 die abgewandelte Ausführungsform eines zweiten Ausführungsbeispiels.

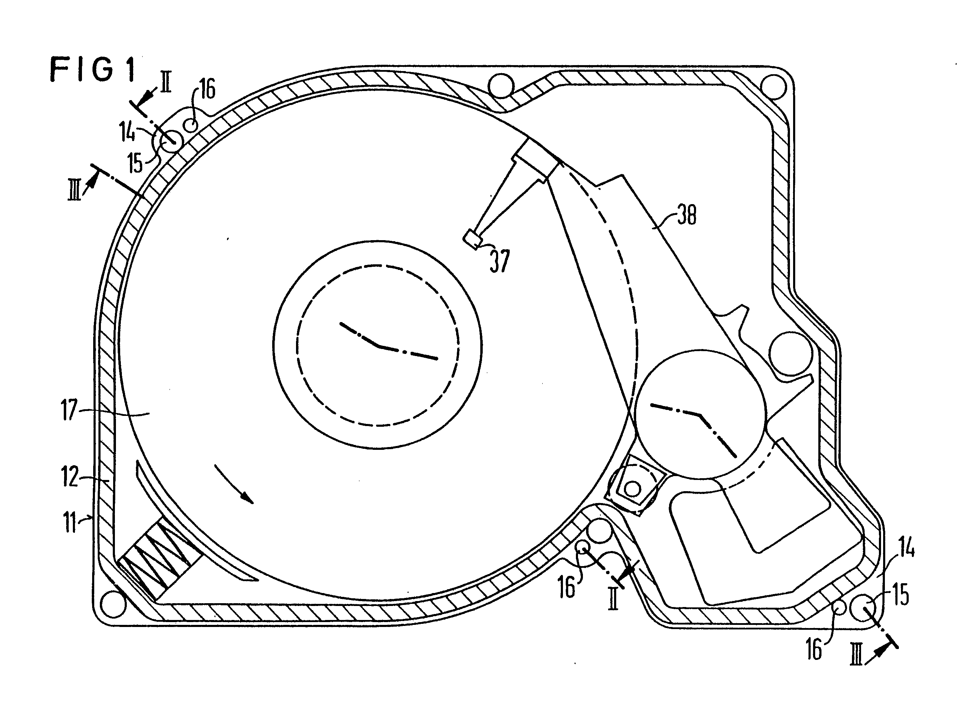

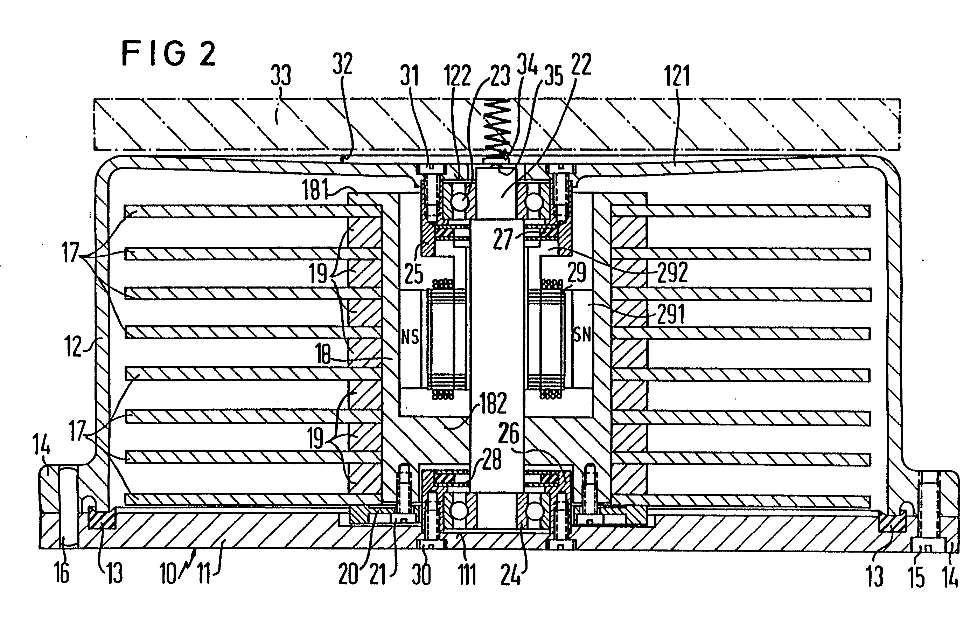

Aus Fig. 1 und 2 ist ein Gehäuse 10 erkennbar, das aus einer planen Grundplatte 11 und einem topfartig ausgebildeten Deckel 12 besteht. Der Deckel liegt ringsum auf einer weichen Dichtung 13 auf, die in eine umlaufende Nut der Grundplatte 11 eingelassen ist. Der Deckel 12 weist seitlich von seinen Seitenwänden vorspringende Befestigungsaugen 14 mit Gewindebohrungen auf, in die von unten her durch entsprechende Bohrungen in der Grundplatte 11 hindurch Gehäuseschrauben 15 zum Festlegen des Deckels 12 auf der Grundplatte 11 eingeschraubt sind. Dabei ist der Deckel an mindestens zwei Stellen über Paßstifte 16 der Grundplatte 11 paßgenau zugeordnet.

In diesem von dem Gehäuse umschlossenen Innenbereich des Plattenspeichers ist der Magnetplattenstapel mit einer Mehrzahl von Magnetplatten 17 angeordnet, die auf einer Nabe 18 festgelegt sind. In dem durch den Bauhöhenstandard vorgegebenen Einbauraum können bei 5 1/4 Zoll Festplattenspeichern bis zu acht Magnetplatten 17 untergebracht werden. Die Nabe 18 weist an einem Ende einen Bund 181 auf, an dem innen die oberste der Magnetplatten 17 anliegt. Die Magnetplatten sind über Zwischenringe 19 auf der Nabe 18 aufgereiht. An dem dem Bund 181 abgewandten Ende der Nabe 18 ist mit Spannschrauben 21 ein Spannring 20 derart festgelegt, daß er den gesamten Magnetplattenstapel mit der Nabe 18 kraftschlüssig verbindet.

Die Nabe 18 selbst ist als Hohlkörper ausgebildet, der mit einem Mittelsteg 182 kraftschlüssig auf einer Spindel 22 festgelegt ist. Die Nabe 18 und die Spindel 22 bilden damit eine bauliche Einheit, die gegebenenfalls auch aus einem Stück gefertigt sein könnte. Die beiden Enden der Spindel 22 sind als Achsstummel ausgebildet, die jeweils ein Kugellager 23 bzw. 24 tragen. Die Innenringe dieser Rollenlager sitzen auf dem entsprechenden Achsstummel mit Festsitz auf. Die Außenringe der Kugellager 23 und 24 sitzen fest in Lagerbuchsen 25 bzw. 26. Der Festsitz der Innenringe und der Außenringe der Kugellager 23, 24 kann mit konventionellen Maßnahmen erzielt werden, z.B. durch Klebung oder durch einen Festsitz. Bei Wahl eines Preßsitzes müssen jedoch die Sitztoleranzen so gewählt werden, daß noch ein Teil der Lagerluft zum späteren Verspannen der Kugellager verbleibt.

Der Innenbereich eines Plattenspeichers soll eine extrem saubere Atmosphäre aufweisen, damit beim Betrieb des Plattenspeichers keine Störungen auftreten können, die auf der Ablagerung von Staubteilchen auf den Oberflächen der Magnetplatten 17 beruhen. Deshalb werden die Kugellager 23, 24 zum Innenraum hin über handelsübliche magnetische Flüssigkeitsdichtungen 27, 28 abgedichtet, die an dem nach innen stehenden Ende der Lagerbuchsen 25, 26 angeordnet sind.

Fig. 2 zeigt schließlich, daß in dem Hohlraum der Nabe 18 ein Antriebsmotor 29 in an sich bekannter Weise angeordnet ist, der deshalb in der Zeichnung nur schematisch dargestellt ist. Der Rotor 291 dieses Motors ist je nach Motorprinzip entweder an der drehenden Nabe 18 oder der drehenden Spindel 22 festgelegt, während sein Stator 292 an der stillstehenden Lagerbuchse 25 befestigt ist. Die Stromzuführung zum Antriebsmotor 29 erfolgt nur zu seinem Stator 292 über nicht dargestellte Kabelanschlüsse. Diese sind durch eine Öffnung zwischen der Innenfläche der Nabe 18 und der Außenfläche der Hülse 25 geführt.

Die beschriebene Baueinheit des Plattenstapels bestehend aus den Magnetplatten 17, der Nabe 18, der Spindel 22, dem Antriebsmotor 29 und den montierten Kugellagern 23, 24 mit den daran festgelegten Lagerbuchsen 25 bzw. 26 kann bereits vor dem eigentlichen Einbau in das Gehäuse 10 in einer entsprechend ausgebildeten Vorrichtung gewuchtet werden, die die Lagerbuchsen 25, 26 aufnimmt und insoweit funktionsgleich mit dem Gehäuse 10 ist. Zugleich mit dem Auswuchten kann auch eine für den späteren Schreib/Lesebetrieb des Magnetplattenspeichers erforderliche Servoinformation für Spur- und/oder Sektorauswahl eingeschrieben werden.

Danach wird der als Modul fertiggestellte Plattenstapel in dem Gehäuse 10 montiert. Dazu weist die nach innen gerichtete Fläche der Grundplatte 11 eine zentrisch zur Achse der Spindel 22 ausgerichtete Ausnehmung mit einer Aufnahmefläche 111 auf. In diese Ausnehmung wird das nach außen stehende Ende der Lagerbuchse 26 eingesetzt und mit Hilfe von Befestigungsschrauben 30 an der Grundplatte 11 festgelegt. Danach wird der Deckel 12 über den Plattenstapel gestülpt und mit den Gehäuseschrauben 15 an der Grundplatte befestigt.

Es sei dabei darauf hingewiesen, daß die einander zugeordneten Teilflächen des Deckels 12 und der Grundplatte 11 im Bereich der Befestigungsaugen 14, bearbeitet sind, um eine eindeutige Dichtung zwischen Deckel und Grundplatte, aber auch ein eng toleriertes Einbaumaß zu erzielen. Die Bearbeitung der Auflageflächen im Bereich der Befestigungsaugen an Grundplatte und Deckel und die Bearbeitung der Anlageflächen 111 bzw. 122 für die Lagerbuchsen 25 und 26 kann in einer Aufspannung erfolgen. Damit wird eine hohe Parallelität dieser Anlageflächen und zusammen mit den präzise gefertigten Lagerbuchsen eine sehr genaue rechtwinkelige Einbaulage der Kugellager 23 und 24 zur Achse erreicht. Dies ist eine wesentliche Voraussetzung für den erforderlichen hochpräzisen Rundlauf der Spindel 22. Beim Aufsetzen des Deckels wird das nach außen weisende Ende der Lagerbuchse 25 an der Innenseite einer Deckplatte 121 des Deckels 12 festgelegt. Dazu besitzt diese Deckplatte 121, analog zu der Grundplatte 11, ebenso eine zentrische Ausnehmung mit einer nach innen gerichteten Aufnahmefläche 122. Diese zentrische Ausnehmung in der Deckplatte 121 nimmt das äußere Ende der Lagerbuchse 25 auf, die mit weiteren Befestigungsschrauben 31 an der Innenfläche dieser Deckplatte festgelegt ist.

Für den konstruktiven Aufbau dieser Spindellageranordnung ist es wichtig, darauf hinzuweisen, daß die Deckfläche 121 des Deckels 12 im nichteingebauten Zustand eine ebene Fläche bildet, d.h. wenn Grundplatte 11 und Deckel 12 ohne einen Plattenstapel zusammengeschraubt werden, ist der Abstand zwischen der Aufnahmefläche 111 und der Aufnahmefläche 122 um einen geringen Betrag größer, als der entsprechende Abstand zwischen den äußeren Enden der Lagerbuchsen 25, 26 eines montierten, jedoch noch nicht in das Gehäuse eingebauten Plattenstapels. Bei dem beschriebenen Einbau eines Plattenstapels in das Gehäuse 1 werden deswegen die beiden Lagerbuchsen 25, 26 aufgrund der von den Befestigungsschrauben 30 bzw. 31 aufgebrachten Verspannkraft axial auseinandergezogen. Dabei wölbt sich die Deckplatte 121 des Deckels 12 um den, aus Gründen der Übersichtlichkeit stark übertrieben gezeichneten Durchfederungsweg 32 nach innen durch und verspannt so die Kugellager 23, 24 in axialer Richtung.

Eine axiale Verspannung von Lagern zum Erzielen eines geringen Lagerspiels ist an sich bekannt. Üblicherweise wird jedoch dazu die Kombination von einem Fest- und Loslager verwendet, wobei eine dem Loslager zugeordnete, in axialer Richtung wirksame Feder gegen den verschiebbaren Ring des Loslagers drückt. Eine solche koaxial auf der entsprechenden Spindel angeordnete Feder benötigt jedoch Platz und ein wenn auch geringes verbleibendes Lagerspiel des Loslagers ist konstruktiv unvermeidbar. Bei der beschriebenen Lagerung jedoch übernimmt die Deckplatte 121 des Deckels 12 diese Federfunktion. Dabei ist die Dicke dieser Deckplatte 121 so bemessen, daß mit einer definierten und durch die Differenz der oben beschriebenen Abstände der Lagerstellen bestimmten Kraft die den Kugellagern 23, 24 zuzuordnende Verspannkraft mit geringer Toleranz erreicht wird. Ein wesentlicher Vorteil dieses Lageraufbaus ist, daß die nutzbare Einbauhöhe durch den Wegfall einer gesonderten, in axialer Richtung wirkenden Feder erhöht wird. Dies ist insbesondere in Verbindung mit der platzsparenden Bauweise eines in die Nabe 18 selbst eingebauten Antriebsmotors 29 von erhöhter Bedeutung. Außerdem haben bei der beschriebenen Lagerverspannung beide Kugellager am Innen- und am Außenring einen Festsitz, so daß der Plattenstapel in radialer Richtung das bei einer konventionellen Lagerverspannung immer noch vorhandene Lagerspiel nicht mehr aufweist. Diese Eliminierung des Lagerspiels ist besonders für hohe Aufzeichnungsdichten bei Plattenstapeln mit einer Mehrzahl von Magnetplatten 17 von ausschlaggebender Bedeutung.

In Fig. 2 ist schematisch weiterhin dargestellt, daß durch diese spielfreie und beidseitige Lagerung der Spindel 22 des Magnetplattenstapels ein platzsparender Aufbau erzielt wird, der auch bei acht Magnetplatten noch ausreichend Platz für die Aufnahme einer elektronischen Baugruppe 33 besitzt. Die mit dieser Baugruppe implementierte Geräteelektronik steht mit dem mechanischen

Lageraufbau an sich in keinem funktionalen Zusammenhang, so daß sich eine ausführlichere Darstellung in der Zeichnung und eine detaillierte Beschreibung erübrigt. Es sei nur auf ein Detail hingewiesen, das eine einwandfreie Erdung des Magnetplattenstapels erläutert. Die Deckplatte 121 des Deckels 12 weist eine zur Spindelachse konzentrische Bohrung auf, in die das entsprechende Ende der Spindel 22 hineinragt. Die elektronische Baugruppe 33 trägt, in Richtung dieses Spindelendes weisend, ein unter Federdruck nachgiebig befestigtes Kohleplättchen 34, das sich auf einer Kugel 35 abstützt, die in einer zentrischen Ausnehmung des entsprechenden Endes der Spindel 22 gefangen ist. Unter der Voraussetzung, daß die federnde Verbindung des Kohleplättchens 34 mit der elektronischen Baugruppe 33 eindeutig geerdet ist, kann damit eine einwandfreie Erdung des umlaufenden Magnetplattenstapels erzielt werden. Dabei kommt es nur darauf an, zwischen dem Kohleplättchen 34 und dem Ende der Spindel 22 eine saubere Masseverbindung herzustellen, deshalb sind andere Ausführungsformen ebenso denkbar, wie z.B. eine Abrundung des Spindelendes, die damit eine Kuppe ergibt, auf der sich das Kohleplättchen 34 unter Federdruck abstützt.

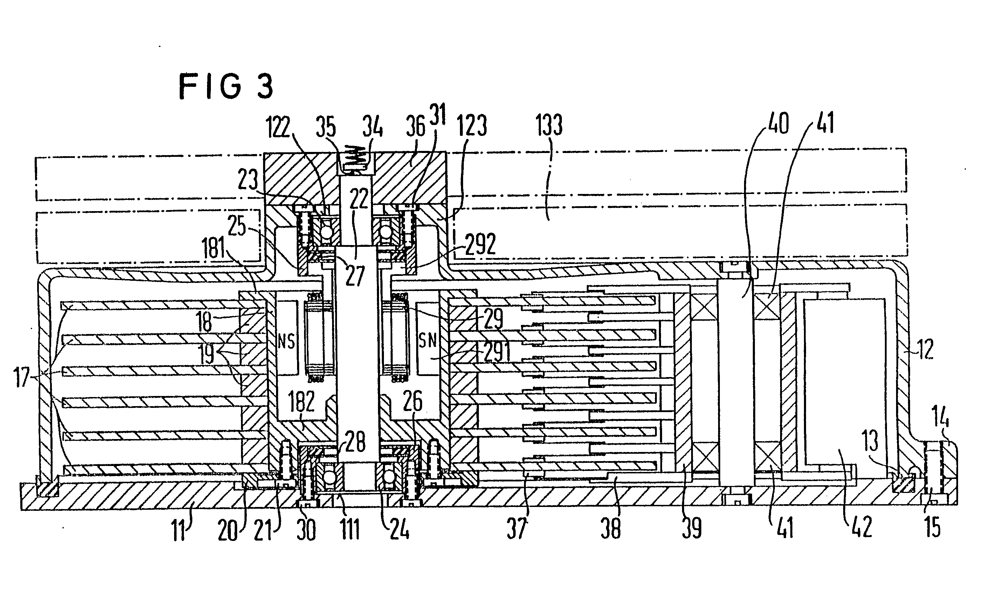

In Fig. 3 ist eine etwas abgewandelte Ausführungsform eines Magnetplattenspeichers dargestellt, bei dem der konstruktive Aufbau der Lagerung für die Spindel 22 grundsätzlich jedoch identisch ist. Im Gegensatz zu dem oben beschriebenen Ausführungsbeispiel wird jedoch davon ausgegangen, daß an die durch die Deckplatte 121 des Gehäuses 1 hindurchreichende Spindel 22 eine mechanische Bremse 36 angeflanscht ist, die in an sich bekannter Weise dazu dient, die Magnetplatten beim Abschalten des Plattenspeichers möglichst rasch abzubremsen. Eine solche mechanische Bremse ist im Zusammenhang mit Magnetplattenspeichern an sich bekannt und stellt vielfach ein käufliches Zubehörteil dar. Der Aufbau der Bremse ist daher nicht im einzelnen dargestellt und auch auf eine detaillierte Beschreibung der Bremse im einzelnen kann verzichtet werden. Es sei nur darauf hingewiesen, daß der notwendige Einbauplatz für diese mechanische Bremse 36 eine entsprechende Öffnung in der elektronischen Baugruppe 33 erfordert. Ebenso wird davon ausgegangen, daß zusätzlich zur elektronischen Baugruppe 33 eine weitere elektronische Baugruppe 133 vorgesehen ist. Damit reduziert sich der Einbauraum für den Magnetplattenstapel, so daß in diesem Ausführungsbeispiel weniger Magnetplatten 17 zu dem Plattenstapel vereinigt sind. Weil sich aber die Baulänge des Motors durch die geringere Anzahl von Magnetplatten nicht in gleichem Maße verkleinern läßt, ist in der Deckplatte 121 in diesem Fall ein nach oben herausragender Kragen 123 vorgesehen, der in analoger Weise zu dem oben beschriebenen Ausführungsbeispiel eine der beiden Lagerstellen für die Spindel 22 bildet. Um diesen Kragen herum kann nun die Gehäuseelektronik 133 angeordnet werden. Die Lagerung der Spindel 22 in dem Gehäuse entspricht genau der oben beschriebenen Art der Lagerung, die einander entsprechenden Bauteile der beiden Ausführungsformen sind mit identischen Bezugszeichen bezeichnet und auf eine weitere Detailbeschreibung kann daher zur Vermeidung von unnötigen Wiederholungen verzichtet werden.

Diese zweite, in Fig. 3 dargestellte Ausführungsform eines erfindungsgemäßen Magnetplattenspeichers zeigt jedoch, zur Vervollständigung der Beschreibung, eine Positioniereinrichtung für Magnetköpfe, die zum Beginn eines Schreib- oder Lesevorganges auf entsprechende Spuren der Magnetplatten 17 eingestellt werden. Jeder Magnetplatte 17 ist hier ein Paar von Magnetköpfen 37 zugeordnet, die im normalen Betrieb in geringem Abstand über die zugeordnete Magnetplattenoberfläche fliegen. Die Magnetköpfe sind an Schwenkarmen 38 befestigt, die, gemeinsam an einer Positioniernabe 39 festgelegt, um eine Positionierachse 40 schwenken und damit die gesamte Oberfläche der zugeordneten Magnetplatte 17 überstreichen können. Dazu ist die Positioniernabe 39 über schematisch dargestellte Kugellager 41 auf der Positionierachse 40 gelagert. Diese Achse ist durch weitere Befestigungsschrauben zwischen der Grundplatte 11 und dem Deckel 12 des Gehäuses verspannt, wobei ebenfalls die Federung des Deckels 12 ausgenutzt wird. Durch Verspannen der Kugellager 41, z.B. über hier nicht dargestellte Abstandshülsen, kann in analoger Weise eine spielfreie Lagerung auch dieser Achse erreicht werden. Die Tatsache, daß die Positionierachse 40 ebenso wie die Spindel 22 zwischen Grundplatte 11 und Deckel 12 befestigt ist, ergibt auf einfache Art eine genaue Zuordnung der Schwenkarme 38 zur Mitte des Abstandes von einer Magnetplatte 17 zur anderen.

Der Vollständigkeit halber sei erwähnt, daß anstelle des Drehpositionierers auch ein Linearpositionierer, bei dem sich die Magnetköpfe 37 geradlinig zur Spindelachse hin und her bewegen, eingesetzt werden kann.

Die Einstellbewegung der Magnetköpfe 37 bzw. der Schwenkarme 38 wird durch einen schematisch angegebenen Positioniermotor 42 bewirkt. Solche Positioniermotoren sind im Zusammenhang mit Drehpositioniereinrichtungen für Magnetplattenspeicher an sich bekannt, bei ihnen wird entweder eine Spule in einem konstanten Magnetfeld bewegt oder ein Magnet wird über eine feststehende Spule ausgelenkt, wobei in jedem Fall die momentane Größe des durch die Spule fließenden Stromes ein Maß für die Drehbeschleunigung des Drehpositionierers ist.

Bei beiden beschriebenen Ausführungsbeispielen der Erfindung ist die Seitenwand des Deckels 12 umlaufend geschlossen. Damit ist der Deckel an sich gegen eine Parallelverschiebung zur Grundplatte 11 sehr steif und ist nur in der beschriebenen Deckplatte in vertikaler Richtung, d.h. in Richtung der Spindeln des Magnetplattenstapels und der Drehpositioniereinrichtung verformbar. Diese Steifigkeit bewirkt, daß die Resonanzfrequenz der Spindel und der Positioniererachse mit ihren zugehörigen Massen so hoch geschoben wird und damit die Schwingungsamplitude so klein bleibt, daß auch bei sehr hohen Spurdichten die Regelung, die zusammen mit dem Positioniermotor die Magnetköpfe den konzentrisch auf der Platte aufgezeichneten Spuren folgen läßt, nicht mehr gestört wird.

In diesem Zusammenhang ist es im Rahmen der Erfindung auch denkbar, die Deckplatte 121 so auszubilden, daß sie im wesentlichen nur im Bereich der Lagerstellen federnd verformbar ist und/oder auch die Grundplatte 11 im Bereich dieser Lagerstellen federnd ausgebildet ist, so daß sich die Verspannkräfte auf beide Teile des Gehäuses, den Deckel 12 und die Grundplatte 11 verteilen. Daneben bietet der beschriebene Gehäuseaufbau die weitere Möglichkeit, daß die Aufnahmestellen für die Lagerung der Spindel und der Positioniererachse in Grundplatte 11 und Deckel 12 jeweils mit der gleichen Maßhaltigkeit bearbeitet werden können, was z.B. unter Ausnutzung der Paßstifte jeweils in einer Aufspannung erfolgt, so daß damit eine exakte Zuordnung der Magnetköpfe zu den entsprechenden Magnetplatten gewährleistet ist.

In den beiden vorstehend beschriebenen Ausführungsbeispielen ist die Schnittfläche zwischen den beiden Gehäuseteilen identisch mit dem umlaufenden Seitenrand des Gehäusedeckels 12. Es ist aber an sich bekannt, diese Schnittfläche auch so zu legen, daß beide Lagerstellen der Spindel 22 gemeinsam in ein und demselben Gehäuseteil liegen, also die Schnittfläche nicht — wie beschrieben — rechtwinklig sondern parallel zu der Achse der Spindel 22 liegt. Das ist besonders vorteilhaft, weil sich so die Konzentrizität der beiden Lagerstellen mit einfachen Mitteln exakt während der Gehäusefertigung erzielen läßt. Auch im vorliegenden Fall ist es denkbar, den Gehäuseaufbau in der bezeichneten Weise abzuwandeln mit der Maßgabe, daß nun bewußt mindestens eine Gehäusewandung vorzugsweise nur im Bereich der betreffenden Lagerstelle federnd nachgiebig gestaltet ist. Die Wahl der Lage der Schnittfläche ist also für die gewünschte Funktion von keiner ausschlaggebenden Bedeutung und es bleibt im einzelnen Anwendungsfall offen, ob aus anderen Überlegungen heraus der einen oder der anderen Lage der Vorzug gegeben wird.

**Patentansprüche**

1. Magnetplattenspeicher mit einer in einem Gehäuse (11, 12) mit Hilfe einer Achse beidseitig gelagerten, mindestens eine Speicherplatte (17) tragenden und durch einen Motor angetriebenen Nabe (18), wobei zur Lagerung der Nabe (18) in einander gegenüberstehenden Gehäusewandungen (11, 12) ein Paar von Kugellagern (23, 24) vorgesehen ist, die zum Erzielen einer spielfreien Nabenführung gegeneinander in axialer Richtung verspannt sind, dadurch gekennzeichnet, daß mindestens eine der Gehäusewandungen (11, 12) wenigstens im Bereich der entsprechenden Lagerstelle für die Nabe (18) in Richtung der Nabenachse bei Aufbringen einer Verspannkraft federnd nachgiebig ausgebildet ist und die Innenringe der Kugellager (23, 24) auf der Nabenachse (22) mit Festsitz in einem Abstand festgelegt sind, der geringfügig von dem entsprechenden Abstand der Lagerstellen für die spätere Aufnahme von festsitzenden Außenringen der Kugellager in den Gehäusewandungen abweicht, so daß diese Außenringe nach dem Einbauen der Nabe in das Gehäuse (10) unter Ausnutzung der federnden Wirkung des nachgiebigen Teiles der einen Gehäusewandung gegenüber den Innenringen in axialer Richtung verschoben sind.

2. Magnetplattenspeicher nach Anspruch 1, dadurch gekennzeichnet, daß beide Gehäusewandungen (11, 12) im Bereich der entsprechenden Lagerstellen der Nabe (18) federnd nachgiebig ausgebildet sind, so daß die Verspannkraft für die Kugellager (23, 24) auf beide Gehäusewandungen verteilt ist.

3. Magnetplattenspeicher nach einem der Ansprüche 1 oder 2, dadurch gekennzeichnet, daß ein Paar von Lagerhülsen (25, 26) vorgesehen ist, die jeweils mit ihrer Innenfläche den Außenring des entsprechenden Kugellagers (23 bzw. 24) mit Festsitz aufnehmen und daß die Lagerhülsen mit der entsprechenden Gehäusewandung starr verbunden sind.

4. Magnetplattenspeicher nach Anspruch 3, dadurch gekennzeichnet, daß die Gehäusewandungen (11, 12) im Bereich der jeweiligen Lagerstelle Bohrungen zur Aufnahme von Befestigungsschrauben aufweisen, mit denen die zugeordnete Lagerhülse (25 bzw. 26) verschraubt ist.

5. Magnetplattenspeicher nach Anspruch 4, dadurch gekennzeichnet, daß magnetische Flüssigkeitsdichtungen (27, 28) vorgesehen sind, die jeweils dem entsprechenden Kugellager (23 bzw. 24) benachbart auf der der Lagerstelle abgewandten Seite mit Festsitz an der zugeordneten Lagerhülse (25 bzw. 26) befestigt sind und die entsprechende Lagerstelle gegenüber dem Inneren des Plattenspeichergehäuses (10) abdichten.

6. Magnetplattenspeicher nach einem der Ansprüche 1 bis 5, dadurch gekennzeichnet, daß das Gehäuse (10) aus einer planen Grundplatte (11) und einem darauf aufgesetzten Deckel (12) mit einer umlaufenden und parallel zur Nabenachse steifen Seitenwand besteht.

7. Magnetplattenspeicher nach Anspruch 6, dadurch gekennzeichnet, daß ein Dichtungsring (13) vorgesehen ist, der mit der Seitenwand des Gehäusedeckels (12) fluchtend in die Grundplatte (11) eingelassen ist und daß Gehäusedeckel und Grundplatte unter Verformung des Dichtungsringes miteinander verschraubt sind.

8. Magnetplattenspeicher nach einem der Ansprüche 1 bis 7, dadurch gekennzeichnet, daß der Gehäuseinnenraum so ausgebildet ist, daß er neben dem Magnetplattenstapel (17, 18, 19) auch eine Drehpositioniereinrichtung (39, 40, 41, 42) aufzunehmen vermag, die mit einer parallel zur Nabe (18) ausgerichteten und ebenfalls an der Grundplatte (11) bzw. dem Gehäusedeckel (12) beidseitig gelagerten Welle (40) ausgestattet ist, sowie mindestens einen Schwenkarm (38) aufweist, der seinerseits mindestens einen gegenüber der zugeordneten Magnetplatte radial verschwenkbaren Magnetkopf (37) trägt.

9. Magnetplattenspeicher nach Anspruch 8, dadurch gekennzeichnet, daß die Lagerstellen für die Welle (40) der Drehpositioniereinrichtung in analoger Weise zu der der Nabe (18) des Magnetplattenstapels ausgebildet sind und damit die entsprechenden Gehäuseteile (11, 12) ebenfalls zum spielfreien Führen der Welle verwendet sind.

10. Magnetplattenspeicher nach einem der Ansprüche 1 bis 9, dadurch gekennzeichnet, daß die Nabe (18) eine Mehrzahl von in gleichmäßigen Abständen angeordneten Magnetplatten (17) trägt und als einseitig offener und mit der Spindel starr verbundener Hohlkörper ausgebildet ist, in dessen Hohlraum der Motor (29) für den Nabenantrieb angeordnet ist, dessen Rotor (291) fest mit der Nabe und dessen Stator (292) mit dem benachbart liegenden Gehäusewandteil (121) starr gekoppelt sind.

**Claims**

1. A magnetic disc store with a hub (18) which is driven by a motor, carries at least one storage disc (17) and is mounted in a housing (11, 12) by means of a shaft on both sides, wherein a pair of ball bearings (23, 24) is provided to mount the hub (18) in facing housing walls (11, 12), which ball bearings are loaded axially against one another to obtain play-free hub guidance, characterised in that at least in the area of the corresponding bearing for the hub (18) at least one of the housing walls (11, 12) is designed to yield resiliently in the direction of the hub axis when a loading force is applied and the inner races of the ball bearings (23, 24) are fixed on the hub shaft (22) with an interference fit with a spacing which differs slightly from the corresponding spacing of the bearing locations for subsequent mounting of fixed outer races of the ball bearings in the housing walls so that after the hub is fitted in the housing (10) these outer races are displaced axially in relation to the inner races exploiting the resilient action of the yielding part of one casing wall.

2. Magnetic disc store as in claim 1, characterised in that both housing walls (11, 12) are designed to yield resiliently in the area of the corresponding bearing locations for the hub (18) so that the loading force for the ball bearings (23, 24) is distributed to both housing walls.

3. Magnetic disc store as in one of claims 1 or 2, characterised in that a pair of bearing bushes (25, 26) is provided the inside face of each of which accomodates the outer race of the corresponding ball bearing (23 or 24) with an interference fit and in that the bearing bushes are rigidly connected to the corresponding housing wall.

4. Magnetic disc store as in claim 3, characterised in that in the area of the respective bearing location the housing walls (11, 12) exhibit drillings to accomodate retaining screws by means of which the associated bearing bush (25 or 26) is secured.

5. Magnetic disc store as in claim 4, characterised in that magnetic fluid seals (27, 28) are provided which are each fixed next to the corresponding ball bearing (23 or 24) on the side remote from the bearing location with an interference fit on the associated bearing bush (25 or 26) and seal the corresponding bearing location from the interior of the disc store housing (10).

6. Magnetic disc store as in one of claims 1 to 5, characterised in that the housing (10) comprises a flat base plate (11) and a cover (12) placed on it with a rigid side wall around it and parallel with the axis of the hub.

7. Magnetic disc store as in claim 6, characterised in that a sealing ring (13) is provided which is let into the base plate (11) flush with the side wall of the housing cover (12) and in that the housing cover and base plate are screwed together distorting the sealing ring.

8. Magnetic disc store as in one of claims 1 to 7, characterised in that the interior of the housing is so designed that in addition to the stack of magnetic discs (17, 18, 19) it can also accomodate a rotary positioning device (39, 40, 41, 42) which is fitted with a shaft (40) which is aligned parallel with the hub (18) and also mounted on both sides on the base plate (11) and the housing cover (12), and has at least one swivelling arm (38) which for its part carries at least one magnetic head (37) which can be swivelled radially relative to the associated magnetic disc.

9. Magnetic disc store as in claim 8, characterised in that the bearing locations for the shaft (40) of the rotary positioning device are designed in the same way as those for the hub (18) for the stack of magnetic discs and thus the corresponding housing parts (11, 12) are also used for play-free guidance of the shaft.

10. Magnetic disc store as in one of claims 1 to 9, characterised in that the hub (18) carries a plurality of magnetic discs (17) disposed at uniform intervals and is designed as a hollow body which is open on one side and rigidly connected to the spindle and the hollow space of which accommodates the motor (29) for the hub drive of which the rotor (291) is fixed to the hub and the stator (292) is rigidly coupled to the neighbouring housing wall section (121).

## Revendications

1. Mémoire à disques magnétiques comportant un moyeu (18) supporté des deux côtés dans un carter (11, 12) à l'aide d'un axe et portant au moins un disque de mémoire (17) et entraîné par un moteur, et dans laquelle pour le support du moyeu (18) il est prévu, dans des parois (11, 12) du boîtier, opposées l'une à l'autre, un couple de roulements à billes (23, 24) qui sont sollicités par serrage l'un vers l'autre dans la direction axiale pour l'obtention d'un guidage sans jeu du moyeu, caractérisé par le fait qu'au moins une des parois (11, 12) du carter est agencée, au moins dans la zone correspondante du montage pour le moyeu (18), de manière à fléchir élastiquement en direction de l'axe du moyeu lors de l'application d'une force de serrage et que les bagues intérieures des roulements à billes (23, 24) sont fixées sur l'axe (22) du moyeu avec un ajustement serré, à une distance qui s'écarte faiblement de la distance correspondante entre les points de montage pour la réception ultérieure de bagues extérieures fixes des roulements à billes dans les parois du carter, de sorte qu'après le montage du moyeu dans le carter (10), ces bagues extérieures peuvent être déplacées dans la direction axiale, par rapport aux bagues intérieures, moyennant l'utilisation de l'action élastique de la pièce fléchissante d'une paroi du carter.

2. Mémoire à disques magnétiques suivant la revendication 1, caractérisée par le fait que les deux parois (11, 12) du carter sont réalisées de manière à fléchir élastiquement dans la zone des points de montage correspondants du moyeu (18) de sorte que la force de serrage pour les roulements à billes (23, 24) est répartie entre les deux parois du carter.

3. Mémoire à disques magnétiques suivant l'une des revendications 1 ou 2, caractérisée par le fait qu'il est prévu un couple de coussinets de paliers (25, 26) dont la surface intérieure respective loge, avec un ajustement serré, la bague extérieure du roulement à billes correspondant (23 ou 24) et que les coussinets de paliers sont reliés rigidement à la paroi correspondante du carter.

4. Mémoire à disques magnétiques suivant la revendication 3, caractérisée par le fait que la paroi (11, 12) du carter possède, dans la zone des points de montage respectifs, des perçages servant à recevoir des vis de fixation, à l'aide desquelles le coussinet de palier associé (25 ou 26) est fixé par vissage.

5. Mémoire à disques magnétiques suivant la revendication 4, caractérisée par le fait qu'il est prévu des garnitures magnétiques d'étanchéité aux liquides (27, 28), qui sont fixées respectivement au roulement à billes correspondant (23 ou 24), au voisinage du côté tourné à l'opposé du point de montage, avec un ajustement serré au niveau du coussinet associé (25 ou 26) et étanchéifient le point de montage correspondant vis-à-vis de l'intérieur du carter (10) de la mémoire à disques.

6. Mémoire à disques magnétiques selon l'une des revendications 1 à 5, caractérisée en ce que le carter (10) est constitué par une plaque de base plane (11) et par un couvercle (12) posé sur cette plaque et possédant une paroi latérale périphérique parallèle à l'axe du moyeu.

7. Mémoire à disques magnétiques suivant la revendication 6, caractérisée par le fait qu'il est prévu une bague d'étanchéité (13) qui est insérée dans la plaque de base (11) en étant alignée avec la paroi latérale du couvercle (12) du carter et que le couvercle du carter et la plaque de base sont fixés l'un à l'autre par vissage moyennant une déformation de la bague d'étanchéité.

8. Mémoire à disques magnétiques suivant l'une des revendications 1 à 7, caractérisée par le fait que l'espace intérieur du carter est agencé de telle sorte qu'il peut recevoir, en dehors de la pile de disques magnétiques (17, 18, 19), également un dispositif (39, 40, 41, 42) de positionnement en rotation, qui est équipé d'un arbre (40) parallèle au moyeu (18) et supporté également des deux côtés dans la plaque de base (11) ou dans le couvercle (12) du carter, et possède au moins un bras pivotant (38) qui porte, pour sa part, au moins une tête magnétique (37) pouvant basculer radialement par rapport au disque magnétique associé.

9. Mémoire à disques magnétiques selon la revendication 8, caractérisée en ce que les points de support pour l'arbre (40) du dispositif de positionnement en rotation sont agencés d'une manière analogue à ceux du moyeu (18) de la pile de disques magnétiques et que par conséquent les éléments correspondants (11, 12) du carter sont également utilisés pour guider l'arbre sans jeu.

10. Mémoire à disque magnétique selon l'une des revendications 1 à 9, caractérisée en ce que le moyeu (18) porte une multiplicité de disques magnétiques (17) disposés à des distances identiques et est réalisé sous la forme d'un corps creux ouvert d'un côté et relié rigidement à la broche et dans lequel se trouve disposé le moteur (29) servant à entraîner le moyeu et dont le rotor (291) est accouplé de façon fixe au moyeu, tandis que son stator (292) est accouplé rigidement à l'élément de paroi (121) du carter, qui en est voisin.

FIG 1

FIG 2

FIG 3